# EUROPÄISCHE PATENTSCHRIFT

(11) **EP 1 490 588 B1**
(45) Veröffentlichungstag und Bekanntmachung des Hinweises auf die Patenterteilung: **30.01.2008**
(21) Anmeldenummer: 03788810.4
(22) Anmeldetag: 21.11.2003
(51) Int. Cl.: F02D 41/22, F02M 55/04, F02M 37/00

(54) **VORRICHTUNG UND VERFAHREN ZUM ERKENNEN VON FEHLERN IN EINEM EINEN KRAFTSTOFFDRUCKDÄMPFER AUFWEISENDEN KRAFTSTOFFEINSPRITZSYSTEM**
DEVICE AND METHOD FOR DETECTING MALFUNCTIONS IN A FUEL INJECTION SYSTEM PROVIDED WITH A FUEL PRESSURE DAMPER
PROCEDE ET DISPOSITIF POUR DETECTER DES DEFAUTS DANS UN SYSTEME D'INJECTION DE CARBURANT COMPORTANT UN REGULATEUR DE PRESSION DE CARBURANT

(30) Priorität: 10.02.2003 DE 10305372
(43) Veröffentlichungstag der Anmeldung: 29.12.2004
(73) Patentinhaber: Siemens VDO Automotive AG, 93055 Regensburg (DE)
(72) Erfinder: ESER, Gerhard, 93155 Hemau (DE); DELP, Matthias, 93077 Bad Abbach (DE)
(86) Internationale Anmeldenummer: PCT/DE2003/003872
(87) Internationale Veröffentlichungsnummer: WO 2004/070183

(56) Entgegenhaltungen:
- EP-A- 1 262 658
- DE-A- 10 146 474
- DE-C- 10 108 175
- DE-C- 19 946 506

## Beschreibung

Die Erfindung betrifft eine Vorrichtung und ein Verfahren zum Erkennen von Fehlern in einem Kraftstoffeinspritzsystem, wobei das Kraftstoffeinspritzsystem einen Niederdruckbereich, einen in dem Niederdruckbereich angeordneten Kraftstoffdruckdämpfer und mindestens einen Drucksensor zum Erfassen des in dem Niederdruckbereich herrschenden Drucks umfasst.

Ein solches Kraftstoffeinspritzsystem ist beispielsweise aus der EP 1 262 658 A2 bekannt.

Die Erfindung betrifft ferner ein Kraftfahrzeug mit einer Vorrichtung zum Erkennen von Fehlern in einem Kraftstoffeinspritzsystem sowie eine Diagnoseeinrichtung mit einer Vorrichtung zum Erkennen von Fehlern in einem Kraftstoffeinspritzsystem.

Kraftstoffeinspritzsysteme, die im Rahmen der vorliegenden Offenbarung behandelt werden, dienen der Einspritzung von Kraftstoff in die Zylinder einer Brennkraftmaschine.

Ohne Beschränkung der Allgemeinheit wird der Stand der Technik und die darauf aufbauende Erfindung anhand eines Hochdruckeinspritzsystems erläutert, wenngleich die Probleme des Standes der Technik sowie deren erfindungsgemäße Lösung auch bei der Niederdruckeinspritzung auftreten beziehungsweise zum Zuge kommen.

Ein Kraftstoffeinspritzsystem, das mit Hochdruck arbeitet, ist im Allgemeinen mit einem Kraftstoffspeicher ("Rail") ausgerüstet, der durch eine Hochdruckpumpe mit Kraftstoff befüllt wird und dabei auf ein für die Hochdruckeinspritzung erforderliches Druckniveau gebracht wird. Die Hochdruckpumpe selbst wird durch eine Niederdruckkraftstoffpumpe mit Kraftstoff versorgt, der von der Niederdruckkraftstoffpumpe aus einem Kraftstofftank entnommen wird. Aus dem Kraftstoffspeicher wird der Kraftstoff über Einspritzventile in den Zylinderinnenraum eingebracht.

Allgemein können zur Steuerung beziehungsweise Regelung des Kraftstoffeinspritzsystems unterschiedliche Maßnahmen ergriffen werden. Beispielsweise können mechanische Regulatoren mit Tankrückführleitung im Niederdruckbereich als auch Regelventile im Hochdruckbereich eingesetzt werden.

Problematisch sind Druckpulsationen im Niederdruckkreis. Bei Hochdruckkraftstoffeinspritzsystemen entstehen diese in erster Linie durch die Arbeit der Hochdruckpumpe, die im Allgemeinen als Einkolbenpumpe ausgelegt ist. Aber auch bei Niederdruckeinspritzsystemen kann es zu derartigen Pulsationen, beispielsweise durch den Einspritzvorgang kommen. Um diese Pulsationen zu dämpfen, kann im Niederdruckbereich ein Kraftstoffdruckdämpfer eingesetzt werden, der beispielsweise durch eine federbelastete Membran realisiert ist. Allgemein stellt der Kraftstoffdruckdämpfer ein kompressibles Medium zur Verfügung, das Druckspitzen aufnimmt und Drucktäler ausgleicht, insgesamt also als Puffer wirkt.

Bei Defekten des Kraftstoffdruckdämpfers, insbesondere bei mechanischen Defekten, kann es zu Druckeinbrüchen im Niederdruckkreis kommen. Dies kann zu einer negativen Beeinflussung der Motorleistung, der Emissionswerte des Motors und sonstiger mit dem Betrieb der Brennkraftmaschine in Verbindung stehender Parameter führen.

In der DE 199 46 506 C1 ist ein Verfahren zum Erkennen von Fehlfunktionen im Drucksystem einer in einem Verbrennungsmotor zu verwendenden Kraftstoff-Einspritzanlage bekannt. Die Kraftstoff-Einspritzanlage enthält einen aus einer Hochdruckpumpe gespeisten Hochdruckspeicher mit Auslässen zur Versorgung mehrerer Kraftstoffinjektoren und einer einen den Speicherdruck regelnden Regelkreis mit einer Messeinrichtung. Diese Messeinrichtung liefert ein für den Istwert des Speicherdruckes repräsentatives Druckmesssignal, wobei das Druckmesssignal für Beobachtungszwecke mit einer zeitlichen Auflösung registriert wird, welche die periodischen Druckschwankungen abbildet, die sich durch das periodische Betätigen der Injektoren und/oder durch aufeinanderfolgende Kolbenhübe der Hochdruckpumpe ergeben. Eine Fehlermeldung wird abgegeben, wenn die Periodizität des so registrierten Druckmesssignals hinsichtlich der Amplitude und/oder Gleichförmigkeit der Schwankungen deutlich von dem Muster abweicht, das bei fehlerfreiem Betrieb des Systems zu erwarten ist. Zusätzlich wird ermittelt, wie groß die Differenz zwischen dem maximalen und den minimalen Wert des Druckmesssignals innerhalb eines oder mehrerer Beobachtungsintervalle ist. Eine Fehlermeldung wird abgegeben, wenn die ermittelte Differenz deutlich kleiner ist als die sich bei fehlerfreiem Betrieb ergebende Differenz.

Der Erfindung liegt die Aufgabe zugrunde, die Vorrichtungen und Verfahren des Standes der Technik in der Weise weiterzubilden, dass die geschilderten Probleme gelöst werden, wobei insbesondere durch einen fehlerhaften Kraftstoffdruckdämpfer verursachte Probleme erkannt und vorzugsweise beseitigt werden sollen.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Die Erfindung baut auf der gattungsgemäßen Vorrichtung dadurch auf, dass ein Fehlbetrieb des Kraftstoffdruckdämpfers anhand eines hochfrequenten Anteils eines von dem Drucksensor zur Verfügung gestellten, einen zeitlichen Druckverlauf im Niederdruckbereich kennzeichnenden ersten Signals erkannt werden kann. Da bei funktionstüchtiger Kraftstoffdruckdämpfung die hochfrequenten Anteile des zeitlichen Kraftstoffdruckverlaufs im Niederdruckbereich gut gedämpft werden, kann anhand des hochfrequenten Anteils ermittelt werden, ob der Kraftstoffdruckdämpfer funktionstüchtig ist. Übersteigen die hochfrequenten Druckschwankungen bestimmte vorgegebene Grenzwerte, so liegt mit hoher Wahrscheinlichkeit ein defekter Kraftstoffdruckdämpfer vor.

Die erfindungsgemäße Vorrichtung ist in vorteilhafter Weise dadurch weitergebildet, dass das erste Signal tiefpassgefiltert werden kann, so dass ein tiefpassgefiltertes zweites Signal erzeugt werden kann, dass ein drittes Signal als absolute Differenz zwischen dem ersten Signal und dem zweiten Signal erzeugt werden kann und dass das dritte Signal mit einem vorgegebenen Schwellenwert verglichen werden kann, wobei bei einem Überschreiten des Schwellenwertes auf einen Fehlbetrieb des Kraftstoffdruckdämpfers geschlossen werden kann. Zunächst wird also der zeitliche Druckverlauf tiefpassgefiltert. Indem zwischen diesem tiefpassgefilterten Signal und dem ursprünglichen Signal die Differenz und deren Absolutwert gebildet wird, erhält man ein weiteres drittes Signal, dessen Amplitude eine absolute Aussagekraft hat, so dass diese mit einem vorgegebenen Schwellenwert verglichen werden kann. Die beschriebenen einfachen Operationen, wie Tiefpassfilterung und Differenzbildung, können in einfacher Weise in einem herkömmlichen Steuergerät, beispielsweise dem Motorsteuergerät, realisiert werden.

Die Vorrichtung kann auch in der Weise nützlich weitergebildet sein, dass das erste Signal einer Fouriertransformation zum Erzeugen eines den zeitlichen Verlauf des ersten Signals entsprechenden Frequenzspektrums unterworfen werden kann und dass hochfrequente Anteile des Frequenzspektrums mit mindestens einem vorgegebenen Schwellenwert verglichen werden können, wobei bei einem Überschreiten des mindestens einen Schwellenwertes auf einen Fehlbetrieb des Kraftstoffdruckdämpfers geschlossen werden kann. Die Analyse des hochfrequenten Anteils des Druckverlaufs wird also beispielsweise im Rahmen einer FFT ("Fast Fourier Transformation") durchgeführt, so dass ein an sich bekanntes Analyseverfahren zur Auswertung herangezogen werden kann.

Die erfindungsgemäße Vorrichtung ist besonders in den Fällen vorteilhaft, in denen das Kraftstoffeinspritzsystem eine Kraftstoffhochdruckpumpe und einen Hochdruckbereich mit einem Kraftstoffspeicher aufweist. Da von dem Kraftstoffdruckdämpfer insbesondere Druckschwankungen gedämpft werden können, die von einer Hochdruckpumpe erzeugt werden, eignet sich die erfindungsgemäße Vorrichtung besonders zum Einsatz in einem Hochdruckkraftstoffeinspritzsystem.

Es ist nützlicherweise vorgesehen, dass ein erkannter Fehlbetrieb des Kraftstoffdruckdämpfers in einem Fehlerspeicher gespeichert werden kann. Somit ist es möglich, bei einer Reparatur oder einer routinemäßigen Wartung des Kraftfahrzeugs einen fehlerhaften Betrieb des Kraftstoffdruckdämpfers zu erkennen beziehungsweise darauf aufmerksam zu werden. Ebenfalls ist denkbar, den Inhalt des Fehlerspeichers dem Fahrer des Fahrzeugs über einen Bordcomputer anzuzeigen.

Es kann insbesondere nützlich sein, dass das Erkennen eines Fehlbetriebs des Kraftstoffdruckdämpfers unter Berücksichtigung von Betriebsbedingungen einer Brennkraftmaschine erfolgen kann. Kritische Betriebsbedingungen können beispielsweise bei kleiner Last vorliegen, da in diesem Fall von der Hochdruckpumpe eine große Kraftstoffmenge in den Niederdruckbereich zurückgefördert wird. Bei reinen Niederdrucksystemen ist die Abhängigkeit der Fehlbetrieberkennung hingegen weitgehend unabhängig von den Betriebsbedingungen der Brennkraftmaschine.

Die erfindungsgemäße Vorrichtung ist in besonders vorteilhafter Weise dadurch weitergebildet, dass mindestens eine dem Kraftstoffeinspritzsystem zugeordnete elektronische Steuereinheit vorgesehen ist, in der mindestens eine der vorgenannten Auswertungen erfolgen kann. Insbesondere können die verschiedenen Schwellenwertvergleiche, die Filterung, die Differenzbildung und die Fouriertransformation auf digitaler Basis in der elektronischen Steuereinheit des Kraftstoffeinspritzsystems beziehungsweise allgemein in der Motorsteuerung erfolgen. Andererseits ist aber auch denkbar, dass Teile der Auswertung durch analoge Schaltungstechnik realisiert sind. Weiterhin können Teile der genannten Auswertungen in anderen Steuereinheiten eines Kraftfahrzeugs beziehungsweise einer sonstigen Vorrichtung vorgenommen werden, wobei zwischen diesen Komponenten und der Steuerung des Kraftstoffeinspritzsystems insbesondere eine Kommunikation über einen Datenbus möglich ist.

Nützlicherweise ist die Vorrichtung so ausgelegt, dass sie eine Schnittstelle für den Einbau in einem Kraftfahrzeug aufweist. Die Fehlererkennung kann also im Kraftfahrzeug selbst erfolgen. Erkannte Fehler können in einem Fehlerspeicher gespeichert werden, und in der Motorsteuerung kann angemessen auf die vorliegenden Fehler reagiert werden.

Zusätzlich oder alternativ kann aber auch vorgesehen sein, dass die Vorrichtung eine Schnittstelle für den Einbau in eine von dem Kraftfahrzeug getrennte Diagnoseeinrichtung aufweist. Die Vorrichtung ist also auch im Rahmen der Fahrzeugdiagnose in einer Werkstatt einsetzbar.

Die Erfindung baut weiterhin auf dem gattungsgemäßen Verfahren dadurch auf, dass das Verfahren die Schritte aufweist: Erfassen eines zeitlichen Druckverlaufs in dem Niederdruckbereich, Erzeugen eines den zeitlichen Druckverlauf im Niederdruckbereich kennzeichnenden ersten Signals und Auswerten eines hochfrequenten Anteils des ersten Signals, um hieran gegebenenfalls einen Fehlbetrieb des Kraftstoffdruckdämpfers zu erkennen.

Dabei ist das erfindungsgemäße Verfahren in besonders vorteilhafter Weise dadurch weitergebildet, dass das erste Signal tiefpassgefiltert wird, so dass ein tiefpassgefiltertes zweites Signal erzeugt wird, dass ein drittes Signal als absolute Differenz zwischen dem ersten Signal und dem zweiten Signal erzeugt wird und dass das dritte Signal mit einem vorgegebenen Schwellenwert verglichen wird, wobei bei einem Überschreiten des Schwellenwertes auf einen Fehlbetrieb des Kraftstoffdruckdämpfers geschlossen wird.

Ebenfalls kann nützlicherweise vorgesehen sein, dass das erste Signal einer Fouriertransformation zum Erzeugen eines dem zeitlichen Verlauf des ersten Signals entsprechenden Frequenzspektrums unterworfen wird und dass hochfrequente Anteile des Frequenzspektrums mit mindestens einem vorgegebenen Schwellenwert verglichen werden, wobei bei einem Überschreiten des mindestens einen Schwellenwertes auf einen Fehlbetrieb des Kraftstoffdruckdämpfers geschlossen wird.

Das erfindungsgemäße Verfahren ist besonders dann vorteilhaft einsetzbar, wenn das Kraftstoffeinspritzsystem eine Kraftstoffhochdruckpumpe und einen Hochdruckbereich mit einem Kraftstoffspeicher aufweist.

Weiterhin ist das Verfahren nützlicherweise dadurch fortgebildet, dass ein erkannter Fehlbetrieb des Kraftstoffdruckdämpfers in einem Fehlerspeicher gespeichert wird.

Ebenfalls ist das Verfahren dadurch in vorteilhafter Weise ausgestaltet, dass das Erkennen eines Fehlbetriebs des Kraftstoffdruckdämpfers unter Berücksichtigung von Betriebsbedingungen einer Brennkraftmaschine erfolgt.

Des weiteren ist bei dem erfindungsgemäßen Verfahren in nützlicher Weise vorgesehen, dass mindestens eine dem Kraftstoffeinspritzsystem zugeordnete elektronische Steuereinheit vorgesehen ist, in der mindestens eine der vorgenannten Auswertungen erfolgt.

Das Verfahren kann ebenfalls nützlich so weitergebildet sein, dass bei erkanntem Fehlbetrieb des Kraftstoffdruckdämpfers Notlaufmaßnahmen ergriffen werden, insbesondere eine Drehzahlbegrenzung und/oder eine Absenkung des Kraftstoffdruckniveaus. Solche Notlaufmaßnahmen können beispielsweise Folgeschäden am Fahrzeug und/oder übermäßige Emissionen vermeiden, so dass das Fahrzeug zumindest noch eine Werkstatt anfahren kann, um dort den Defekt zu beheben.

Weiterhin betrifft die Erfindung ein Kraftfahrzeug mit einer erfindungsgemäßen Vorrichtung, die insbesondere zur Durchführung eines erfindungsgemäßen Verfahrens geeignet ist.

Die Erfindung betrifft auch eine Diagnoseeinrichtung mit einer erfindungsgemäßen Vorrichtung, die insbesondere zur Durchführung eines erfindungsgemäßen Verfahrens geeignet ist.

Der Erfindung liegt die Erkenntnis zugrunde, dass aus dem Druckverlauf im Niederdruckkreis auf einen Defekt, insbesondere einen mechanischen Defekt, des Kraftstoffdruckdämpfers geschlossen werden kann. Da die hochfrequenten Anteile, die beispielsweise durch die Arbeit der Hochruckpumpe erzeugt werden, bei einem Defekt des Kraftstoffdruckdämpfers überhöht sind, kann über eine Erfassung dieser hochfrequenten Anteile und eine entsprechende Auswertung auf einen fehlerhaften Kraftstoffdruckdämpfer rückgeschlossen werden.

Die Erfindung wird nun unter Bezugnahme auf die beigefügten Zeichnungen anhand bevorzugter Ausführungsformen beispielhaft erläutert.

Es zeigen:
- Figur 1: eine schematische Darstellung eines Kraftstoffeinspritzsystems;
- Figur 2: einen zeitlichen Verlauf des Kraftstoffdrucks im Niederdruckbereich bei ordnungsgemäß arbeitendem Kraftstoffdruckdämpfer;
- Figur 3: einen zeitlichen Verlauf des Kraftstoffdrucks im Niederdruckbereich mit fehlerhaftem Kraftstoffdruckdämpfer;
- Figur 4: zwei Diagramme zur Erläuterung einer im Rahmen der Erfindung einsetzbaren Auswertung;
- Figur 5: zwei für fehlerhaften Betrieb beziehungsweise ordnungsgemäßen Betrieb des Kraftstoffdruckdämpfers charakteristische Frequenzspektren; und
- Figur 6: ein Flussdiagramm zur Erläuterung eines erfindungsgemäßen Verfahrens.

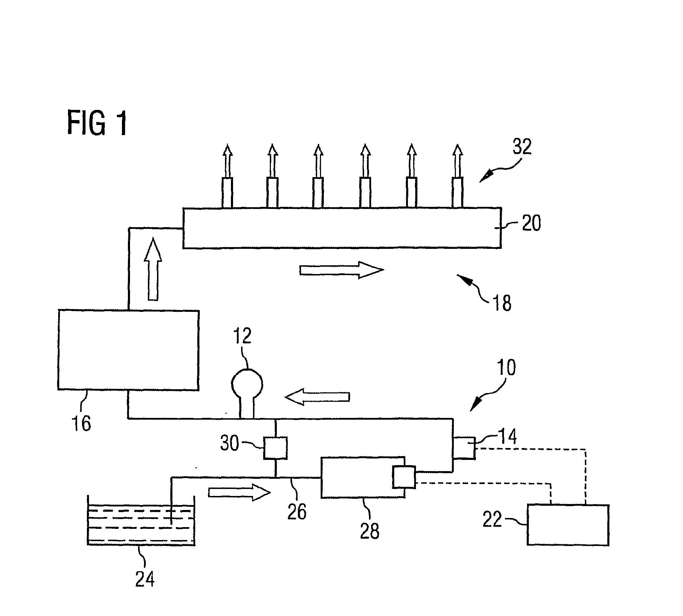

Figur 1 zeigt eine schematische Darstellung eines Kraftstoffeinspritzsystems. Aus einem Kraftstofftank 24 wird über eine Kraftstoffleitung 26 mittels einer Niederdruckpumpe 28 Kraftstoff gefördert. Die Niederdruckpumpe 28 versorgt einen Niederdruckbereich 10 mit Kraftstoff. Der Druck in diesem Niederdruckbereich 10 kann durch eine elektronische Steuereinheit 22 gesteuert beziehungsweise geregelt werden. Zu diesem Zweck ist in dem Niederdruckbereich 10 ein Drucksensor 14 vorgesehen, der Druckinformation an die elektronische Steuereinheit 22 liefert. Die elektronische Steuereinheit 22 kann den Betrieb der Niederdruckpumpe 28, insbesondere auf der Grundlage der von dem Drucksensor 14 gelieferten Signale, beeinflussen. Weiterhin ist ein Überdruckbegrenzungsventil 30 vorgesehen, über das Kraftstoff zum Niederdruckbereich der Niederdruckpumpe 28 zurückströmen kann. Der Hauptweg des Kraftstoffs von der Niederdruckpumpe 28 führt zu einer Kraftstoffhochdruckpumpe 16. Diese Kraftstoffhochdruckpumpe 16 fördert den Kraftstoff in einen Hochdruckbereich 18 und insbesondere in einen Kraftstoffspeicher 20 (das "Rail"). Der Kraftstoffspeicher 20 ist mit Injektoren beziehungsweise Einspritzventilen 32 ausgestattet, die den Kraftstoff in die Zylinderinnenräume einbringen können. Da die Hochdruckkraftstoffpumpe 16 insbesondere als kontinuierlich arbeitende Pumpe ausgelegt ist, beispielsweise als Einkolbenhochdruckpumpe, werden im Allgemeinen Maßnahmen ergriffen, um den erwünschten Druck im Kraftstoffspeicher 20 einzustellen. Dies kann beispielsweise durch ein (nicht dargestelltes) Kraftstoffregelventil erfolgen, über das eine Differenz zwischen dem von der Kraftstoffhochdruckpumpe 16 geförderten Kraftstoff und dem durch die Einspritzventile 32 in die Zylinder eingebrachten Kraftstoff in den Niederdruckbereich 10 abfließt. Ein solches dem Hochdruckbereich 18 zugeordnetes Kraftstoffdruckregelventil kann von einer elektronischen Steuerung angesteuert werden, die (neben anderen) als Eingangswert einen von einem am Kraftstoffspeicher 20 angeordneten (nicht dargestellten) Drucksensor ermittelten Wert erhält. Somit kann die Regelung des Einspritzdrucks erfolgen, indem das Kraftstoffdruckregelventil je nach Ansteuerung durch die elektronische Steuerung mehr oder weniger Kraftstoff in den Niederdruckkreis abfließen lässt. Die elektronische Steuerung kann als individuelle Steuerung ausgelegt sein, sie kann aber auch mit der elektronischen Steuerung 22 integriert sein, beispielsweise in einem Motorsteuergerät.

Im Niederdruckbereich 10 ist weiterhin ein Kraftstoffdruckdämpfer 12 vorgesehen. Dieser dient zur Dämpfung von Druckpulsationen, die im Niederdruckbereich 10 insbesondere durch die Arbeit der Kraftstoffhochdruckpumpe 16 entstehen.

Die Verwendung eines solchen Kraftstoffdruckdämpfers ist auch bei Niederdrucksystemen sinnvoll, da es hier beispielsweise durch die Einspritzung zu Druckschwankungen kommen kann, die vorzugsweise gedämpft werden sollten. Ohne Beschränkung der Allgemeinheit wird die Erfindung jedoch an einem Hochdruckkraftstoffeinspritzsystem erläutert.

Kommt es zu einem Defekt, insbesondere zu einem mechanischen Defekt des Kraftstoffdruckdämpfers 12, so kann es aufgrund der starken Druckschwankungen im Niederdruckbereich 10 zu Druckeinbrüchen kommen. Dies beeinflusst letztlich die Funktion der Brennkraftmaschine negativ, beispielsweise im Hinblick auf ihre Leistung und ihre Emissionswerte. Es ist daher sinnvoll, auf einen solchen Defekt des Kraftstoffdruckdämpfers 12 zu reagieren, wozu dieser Defekt zunächst erkannt werden muss. Hierzu wird die Anwesenheit des Drucksensors 14 im Niederdruckbereich 10 ausgenützt. Wird mittels dem Drucksensor 14 eine unzureichende Druckdämpfung erkannt, so können Maßnahmen und insbesondere Gegenmaßnahmen ergriffen werden, die beispielsweise im Eintragen des Defekts in einem Fehlerspeicher, der Absenkung des Druckniveaus und einer Drehzahlbegrenzung bestehen können. Die Erkennung der übermäßigen Druckschwankungen erfolgt anhand eines hochfrequenten Anteils der von dem Drucksensor 14 zur Verfügung gestellten Signale, was nachfolgend genauer erläutert wird.

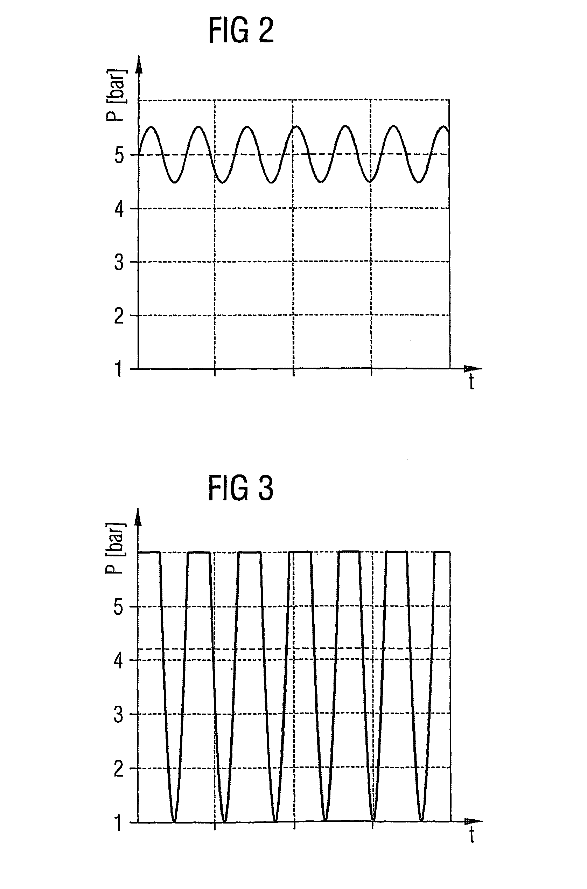

Figur 2 zeigt einen zeitlichen Verlauf des Kraftstoffdrucks im Niederdruckbereich bei ordnungsgemäß arbeitendem Kraftstoffdruckdämpfer. Der Druck schwankt mit einer Amplitude von ca. +/- 0,5 bar um einen mittleren Druckwert von 5 bar. Dies wird durch eine zufriedenstellende Druckdämpfung des Kraftstoffdruckdämpfers 12 erreicht.

Figur 3 zeigt einen zeitlichen Verlauf des Kraftstoffdrucks im Niederdruckbereich mit fehlerhaftem Kraftstoffdruckdämpfer. Hier schwankt der Druck mit einer sehr viel größeren Amplitude um seinen Mittelwert, was zu tiefen Drucktälern und hohen Druckspitzen und somit zu Funktionsbeeinträchtigungen des Kraftstoffeinspritzsystems führt. Die Druckspitzen können durch das in Figur 1 dargestellte Überdruckbegrenzungsventil 30 abgeschnitten werden. Eine zufriedenstellende Situation ergibt sich hieraus aufgrund des defekten Kraftstoffdruckdämpfers 12 jedoch nicht.

Die quantitative Erkennung, ob die Druckschwankungen einen zulässigen Grenzwert überschreiten und somit mit hoher Wahrscheinlichkeit ein Defekt des Kraftstoffdruckdämpfers 12 vorliegt, wird nachfolgend erläutert.

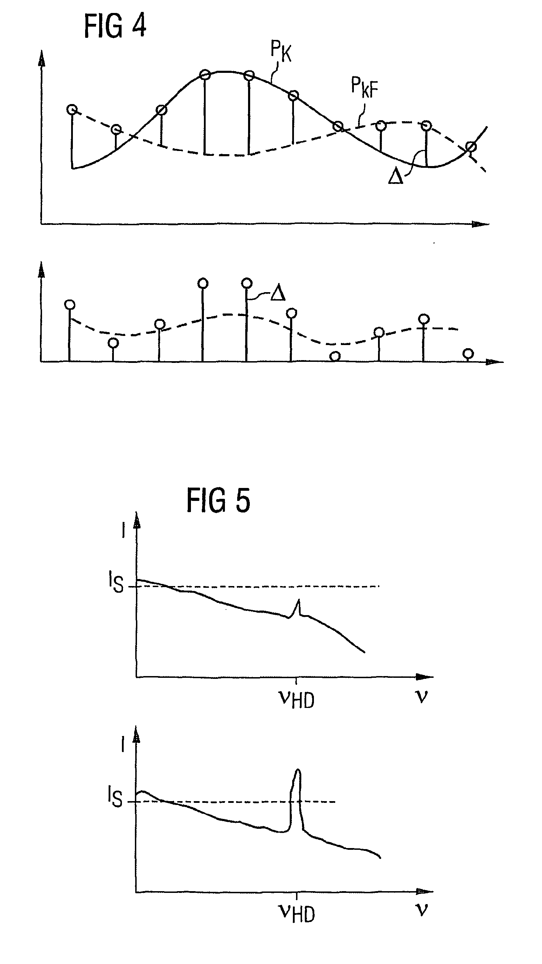

Figur 4 zeigt zwei Diagramme zur Erläuterung einer im Rahmen der Erfindung einsetzbaren Auswertung. Im oberen Diagramm ist ein fiktiver Kraftstoffdruckverlauf gegen die Zeit aufgetragen. Die Linie p_{K} symbolisiert den Druckverlauf im Niederdruckbereich 10. Die Linie p_{KF} symbolisiert einen tiefpassgefilterten Druckverlauf im Niederdruckbereich 10. Diese Tiefpassfilterung erfolgt vorzugsweise in der elektronischen Steuereinheit 22, kann aber auch auf andere bekannte Art und Weise vorgenommen werden. Zwischen den beiden Kurven pₖ und p_{KF} wird die Differenz Δ gebildet. Die Absolutbeträge dieser Differenz Δ sind im unteren Diagramm in Figur 3 nochmals dargestellt.

Durch diese Filterung und Differenzbildung erhält man somit einen Werteverlauf, der mit einer absolut gewählten Druckschwelle verglichen werden kann. Auf diese Weise kann der hochfrequente Anteil des Kraftstoffdruckverlaufs als Kriterium für eine ordnungsgemäße Funktion des Kraftstoffdruckdämpfers 12 herangezogen werden.

Figur 5 zeigt zwei für fehlerhaften beziehungsweise ordnungsgemäßen Betrieb des Kraftstoffdruckdämpfers charakteristische Frequenzspektren. Im oberen Diagramm ist die Intensität I des von dem Kraftstoffdrucksensor 14 gelieferten Signals gegen die Frequenz ν aufgetragen, wobei eine ordnungsgemäße Funktion des Kraftstoffdruckdämpfers 12 vorausgesetzt wird. Demzufolge hat das Frequenzspektrum beliebige und im vorliegenden Zusammenhang nicht weiter zu beachtende Frequenzanteile bei niedrigen Frequenzen, die die allgemeinen niederfrequenten Druckschwankungen im Niederdruckbereich 10 widerspiegeln. Dem Intensitätsspektrum werden weiterhin hohe Frequenzen aufgeprägt, von denen eine bei ν_{HD} beispielhaft dargestellt ist. Diese Frequenzspitze kann durch die Arbeit der Kraftstoffhochdruckpumpe 16 mit der Frequenz ν_{HD} bewirkt werden. Bei ausreichender Kraftstoffdruckdämpfung ist die Intensität bei ν_{HD} gering, wobei sie insbesondere unterhalb einer vorbestimmten Schwelle I_{S} liegt. Das Unterschreiten dieser Schwelle I_{S} ist somit das Kriterium für einen ordnungsgemäß arbeitenden Kraftstoffdruckdämpfer.

Im Gegensatz zum oberen Frequenzspektrum in Figur 5 beruht das untere Frequenzspektrum auf einer defekten Kraftstoffdruckdämpfung. Dies wird durch das Überschreiten der Intensitätsschwelle I_{S} bei ν_{HD} erkannt.

Die Schwellenwerte, die bei den Auswertungen gemäß Figur 4 und Figur 5 verwendet werden, können den jeweiligen Betriebsbedingungen angepasst werden, wobei insbesondere eine dynamische Anpassung in Abhängigkeit von Betriebszuständen der Brennkraftmaschine möglich ist. So kommt es beispielsweise im Zusammenhang mit dem Betrieb von Hochdruckeinspritzsystemen bei kleiner Last aufgrund der hohen Kraftstoffrückförderung aus dem Hochdruckbereich zu höheren Druckschwankungen, so dass in diesem Fall die Schwellenwerte unkritischer angesetzt werden können.

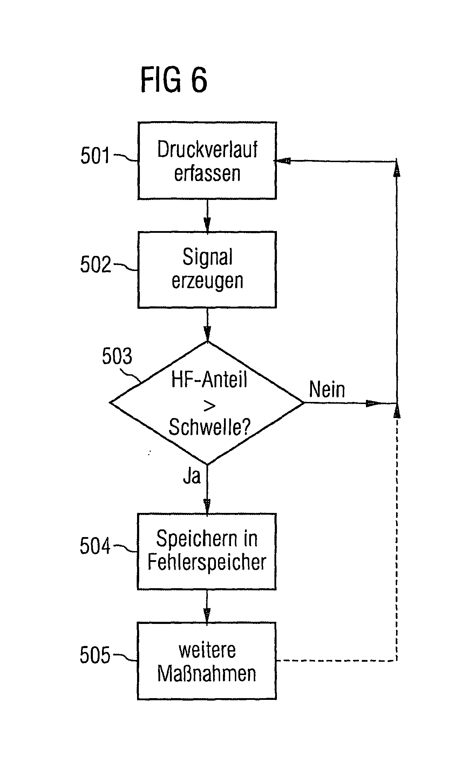

Figur 6 zeigt ein Flussdiagramm zur Erläuterung eines erfindungsgemäßen Verfahrens. In Schritt S01 wird der zeitliche Druckverlauf im Niederdruckbereich eines Kraftstoffeinspritzsystems erfasst. Auf der Grundlage dieser Druckerfassung wird in Schritt S02 ein Signal erzeugt, das den zeitlichen Druckverlauf im Niederdruckbereich kennzeichnet. In Schritt S03 wird ein hochfrequenter Anteil des in Schritt S02 erzeugten Signals ausgewertet und insbesondere mit einem Schwellenwert verglichen. Liegt dieser hochfrequente Anteil unterhalb eines vorgegebenen Schwellenwertes, so arbeitet der Kraftstoffdruckdämpfer ordnungsgemäß und das Verfahren kehrt zu Schritt S01 zurück. Übersteigt der hochfrequente Anteil jedoch den Schwellenwert, so wird in Schritt S04 in einen Fehlerspeicher eingetragen, dass ein Defekt am Kraftstoffdruckdämpfer vorliegt. In Schritt S05 können weitere Maßnahmen, beispielsweise zur Schadensbegrenzung ergriffen werden. Ausgehend von den Schritten S04 beziehungsweise S05 ist es möglich, wieder in die Überwachungsroutine einzutreten, wobei es auch denkbar ist, nach einmaliger oder mehrmaliger Erkennung eines Fehlbetriebs des Kraftstoffdruckdämpfers die erfindungsgemäße Überwachung abzubrechen.

Die Erfindung lässt sich wie folgt zusammenfassen: In dem Niederdruckbereich 10 eines Kraftstoffeinspritzsystems ist ein Kraftstoffdruckdämpfer 12 vorgesehen, um Druckschwankungen zu dämpfen, insbesondere solche Druckschwankungen, die durch den Betrieb einer dem Niederdruckbereich 10 nachgeschalteten Kraftstoffhochdruckpumpe 16 bewirkt werden. In dem Niederdruckbereich 10 wird der Druckverlauf von einem Drucksensor 14 erfasst. Anhand hochfrequenter Komponenten dieses von dem Drucksensor 14 erfassten Druckverlaufs lässt sich ermitteln, ob der Kraftstoffdruckdämpfer 12 ordnungsgemäß arbeitet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung zum Erkennen von Fehlern in einem Kraftstoffeinspritzsystem, wobei das Kraftstoffeinspritzsystem
- einen Niederdruckbereich (10),
- einen in dem Niederdruckbereich (10) angeordneten Kraftstoffdruckdämpfer (12) und
- mindestens einen Drucksensor (14) zum Erfassen des in dem Niederdruckbereich (10) herrschenden Drucks umfasst,
**dadurch gekennzeichnet,**
**dass** ein Fehlbetrieb des Kraftstoffdruckdämpfers (12) anhand eines hochfrequenten Anteils eines von dem Drucksensor (14) zur Verfügung gestellten, einen zeitlichen Druckverlauf im Niederdruckbereich (10) kennzeichnenden ersten Signals erkannt wird.

2. Vorrichtung nach Anspruch 1,
**dadurch gekennzeichnet,**
- **dass** das erste Signal tiefpassgefiltert werden kann, so dass ein tiefpassgefiltertes zweites Signal erzeugt wird,
- **dass** ein drittes Signal als absolute Differenz zwischen dem ersten Signal und dem zweiten Signal erzeugt wird und
- **dass** das dritte Signal mit einem vorgegebenen Schwellenwert verglichen wird, wobei bei einem Überschreiten des Schwellenwertes auf einen Fehlbetrieb des Kraftstoffdruckdämpfers (12) geschlossen wird.

3. Vorrichtung nach Anspruch 1 oder 2,
**dadurch gekennzeichnet,**
- **dass** das erste Signal einer Fouriertransformation zum Erzeugen eines dem zeitlichen Verlauf des ersten Signals entsprechenden Frequenzspektrums unterworfen wird und
- **dass** hochfrequente Anteile des Frequenzspektrums mit mindestens einem vorgegebenen Schwellenwert verglichen werden wobei bei einem Überschreiten des mindestens einen Schwellenwertes auf einen Fehlbetrieb des Kraftstoffdruckdämpfers (12) geschlossen wird.

4. Vorrichtung nach einem der vorangehenden Ansprüche,
**dadurch gekennzeichnet,**
**dass** das Kraftstoffeinspritzsystem eine Kraftstoffhochdruckpumpe (16) und einen Hochdruckbereich (18) mit einem Kraftstoffspeicher (20) aufweist.

5. Vorrichtung nach einem der vorangehenden Ansprüche,
**dadurch gekennzeichnet,**
**dass** ein erkannter Fehlbetrieb des Kraftstoffdruckdämpfers (12) in einem Fehlerspeicher gespeichert wird.

6. Vorrichtung nach einem der vorangehenden Ansprüche,
**dadurch gekennzeichnet,**
**dass** das Erkennen eines Fehlbetriebs des Kraftstoffdruckdämpfers (12) unter Berücksichtigung von Betriebsbedingungen einer Brennkraftmaschine erfolgt.

7. Vorrichtung nach einem der vorangehenden Ansprüche,
**dadurch gekennzeichnet,**
**dass** mindestens eine dem Kraftstoffeinspritzsystem zugeordnete elektronische Steuereinheit (22) vorgesehen ist, in der mindestens eine der vorgenannten Auswertungen erfolgt.

8. Vorrichtung nach einem der vorangehenden Ansprüche,
**dadurch gekennzeichnet,**
**dass** sie eine Schnittstelle für den Einbau in ein Kraftfahrzeug aufweist.

9. Vorrichtung nach einem der vorangehenden Ansprüche,
**dadurch gekennzeichnet,**
**dass** sie eine Schnittstelle für den Einbau in eine von dem Kraftfahrzeug getrennte Diagnoseeinrichtung aufweist.

10. Verfahren zum Erkennen von Fehlern in einem Kraftstoffeinspritzsystem, wobei das Kraftstoffeinspritzsystem
- einen Niederdruckbereich (10),
- einen in dem Niederdruckbereich (10) angeordneten Kraftstoffdruckdämpfer (12) und
- mindestens einen Drucksensor (14) zum Erfassen des in dem Niederdruckbereich (10) herrschenden Drucks umfasst,
**dadurch gekennzeichnet,**
**dass** das Verfahren die Schritte aufweist:
- Erfassen eines zeitlichen Druckverlaufs in dem Niederdruckbereich (10),
- Erzeugen eines den zeitlichen Druckverlauf im Niederdruckbereich (10) kennzeichnenden ersten Signals und
- Auswerten eines hochfrequenten Anteils des ersten Signals, um hieran gegebenenfalls einen Fehlbetrieb des Kraftstoffdruckdämpfers (12) zu erkennen.

11. Verfahren nach Anspruch 10,
**dadurch gekennzeichnet,**
- **dass** das erste Signal tiefpassgefiltert wird, so dass ein tiefpassgefiltertes zweites Signal erzeugt wird,
- **dass** ein drittes Signal als absolute Differenz zwischen dem ersten Signal und dem zweiten Signal erzeugt wird und
- **dass** das dritte Signal mit einem vorgegebenen Schwellenwert verglichen wird, wobei bei einem Überschreiten des Schwellenwertes auf einen Fehlbetrieb des Kraftstoffdruckdämpfers (12) geschlossen wird.

12. Verfahren nach Anspruch 10 oder 11,
**dadurch gekennzeichnet,**
- **dass** das erste Signal einer Fouriertransformation zum Erzeugen eines dem zeitlichen Verlauf des ersten Signals entsprechenden Frequenzspektrums unterworfen wird und
- **dass** hochfrequente Anteile des Frequenzspektrums mit mindestens einem vorgegebenen Schwellenwert verglichen werden, wobei bei einem Überschreiten des mindestens einen Schwellenwertes auf einen Fehlbetrieb des Kraftstoffdruckdämpfers (12) geschlossen wird.

13. Verfahren nach einem der Ansprüche 10 bis 12,
**dadurch gekennzeichnet,**
**dass** das Kraftstoffeinspritzsystem eine Kraftstoffhochdruckpumpe (16) und einen Hochdruckbereich (18) mit einem Kraftstoffspeicher (20) aufweist.

14. Verfahren nach einem der Ansprüche 10 bis 13,
**dadurch gekennzeichnet,**
**dass** ein erkannter Fehlbetrieb des Kraftstoffdruckdämpfers (12) in einem Fehlerspeicher gespeichert wird.

15. Verfahren nach einem der Ansprüche 10 bis 14,
**dadurch gekennzeichnet,**
**dass** das Erkennen eines Fehlbetriebs des Kraftstoffdruckdämpfers (12) unter Berücksichtigung von Betriebsbedingungen einer Brennkraftmaschine erfolgt.

16. Verfahren nach einem der Ansprüche 10 bis 15,
**dadurch gekennzeichnet,**
**dass** mindestens eine dem Kraftstoffeinspritzsystem zugeordnete elektronische Steuereinheit (22) vorgesehen ist, in der mindestens eine der vorgenannten Auswertungen erfolgt.

17. Verfahren nach einem der Ansprüche 10 bis 16,
**dadurch gekennzeichnet,**
**dass** bei erkanntem Fehlbetrieb des Kraftstoffdruckdämpfers (12) Notlaufmaßnahmen ergriffen werden, insbesondere eine Drehzahlbegrenzung und/oder eine Absenkung des Kraftstoffdruckniveaus.

18. Kraftfahrzeug mit einer Vorrichtung zum Erkennen von Fehlern in dem Kraftstoffeinspritzsystem nach einem der Ansprüche 1 bis 9 und insbesondere zur Durchführung eines Verfahrens nach einem der Ansprüche 10 bis 17.

19. Diagnoseeinrichtung mit einer Vorrichtung zum Erkennen von Fehlern in dem Kraftstoffeinspritzsystem eines Kraftfahrzeugs, die von dem Kraftfahrzeug getrennt angeordnet ist, nach einem der Ansprüche 1 bis 9 und insbesondere zur Durchführung eines Verfahrens nach einem der Ansprüche 10 bis 17.

## Claims

1. Device for the detection of faults in a fuel injection system, whereby the fuel injection system has
- a low-pressure zone (10)
- a fuel pressure damper (12) located in the low-pressure zone (10), and
- at least one pressure sensor (14) for sensing the pressure which prevails in the low-pressure zone (10),
**characterised in that**
a malfunction of the fuel pressure damper (12) is recognised by reference to a high-frequency component of a first signal, supplied by the pressure sensor (14), which characterises the pressure/time trace in the low-pressure zone (10).

2. Device in accordance with claim 1,
**characterised in that**
- the first signal is low-pass filtered to enable a low-pass filtered second signal to be generated,
- a third signal is generated as the absolute difference between the first signal and the second signal,
- the third signal is compared with a prescribed threshold value, whereby if the threshold value is exceeded it is concluded that there is a malfunction of the fuel pressure damper (12).

3. Device in accordance with claim 1 or 2,
**characterised in that**
- the first signal is subjected to a Fourier transformation to generate a frequency spectrum which corresponds to the time-trace of the first signal, and
- the high-frequency component of the frequency spectrum are compared with at least one prescribed threshold value, whereby if the threshold value(s) is (are) exceeded it is concluded that there is a malfunction of the fuel pressure damper (12).

4. Device in accordance with one of the preceding claims
**characterised in that**
the fuel injection system has a high-pressure fuel pump (16) and a high-pressure zone (18) with a fuel store (20).

5. Device in accordance with one of the preceding claims
**characterised in that**
any malfunction of the fuel pressure damper (12) which is recognised is stored in a fault memory.

6. Device in accordance with one of the preceding claims
**characterised in that**
the recognition of a malfunction of the fuel pressure damper (12) is effected taking into account the operating conditions in an internal combustion engine.

7. Device in accordance with one of the preceding claims
**characterised in that**
the fuel injection system is provided with at least one control unit (22), in which at least one of the above-mentioned analyses is performed.

8. Device in accordance with one of the preceding claims
**characterised in that**
it has an interface for its installation in a vehicle.

9. Device in accordance with one of the preceding claims
**characterised in that**
it has an interface for its installation in a diagnostic facility which is separate from the vehicle.

10. Method for recognising faults in a fuel injection system in which the fuel injection system has
- a low-pressure zone (10).
- a fuel pressure damper (12) located in the low-pressure zone (10), and
- at least one pressure sensor (14) for sensing the pressure which prevails in the low-pressure zone (10),
**characterised in that**
the method includes the steps:
- sense a pressure/time trace in the low-pressure zone (10),
- generate a first signal which characterises the pressure trace in the low-pressure zone (10),
- analyse a high-frequency component of the first signal in order to recognise from it a malfunction, if there is one, of the fuel pressure damper (12).

11. Method in accordance with claim 10,
**characterised in that**
- the first signal is low-pass filtered, so that a low-pass filtered second signal is generated,
- a third signal is generated as the absolute difference between the first signal and the second signal,
- the third signal is compared with a prescribed threshold value, whereby if the threshold value is exceeded it is concluded that there is a malfunction of the fuel pressure damper (12).

12. Method in accordance with claim 10 or 11,
**characterised in that**
- the first signal is subjected to a Fourier transformation, to generate a frequency spectrum corresponding to the time-trace of the first signal,
- the high-frequency component of the frequency spectrum is compared with at least one prescribed threshold value, whereby if the threshold value(s) is (are) exceeded it is concluded that there is a malfunction of the fuel pressure damper (12).

13. Method in accordance with one of the claims 10 to 12,
**characterised in that**
the fuel injection system has a high-pressure fuel pump (16) and a high-pressure zone (18) with a fuel store (20).

14. Method in accordance with one of the claims 10 to 13,
**characterised in that**
a malfunction which is recognised in the fuel pressure damper (12) is stored in a fault memory.

15. Method in accordance with one of the claims 10 to 14,
**characterised in that**
the recognition of a fuel pressure damper (12) malfunction is effected taking into account the operating conditions of the internal combustion engine.

16. Method in accordance with one of the claims 10 to 15,
**characterised in that**
the fuel injection system has at least electronic one control unit (22) assigned to it, in which at least one of the above-mentioned analyses is performed.

17. Method in accordance with one of the claims 10 to 16,
**characterised in that**
emergency measures are initiated if a malfunction of the fuel pressure damper (12) is detected, in particular a limitation of the rotation speed and/or a reduction in the fuel pressure level.

18. Vehicle with a device for recognising faults in the fuel injection system in accordance with one of the claims 1 to 9, and in particular for carrying out a method in accordance with one of the claims 10 to 17.

19. Diagnostic facility with a device, for recognising faults in the fuel injection system on a vehicle, which is located off the vehicle, in accordance with one of the claims 1 to 9, and in particular for carrying out a method in accordance with one of the claims 10 to 17.

## Revendications

1. Dispositif pour la détection de défauts dans un système d'injection de carburant, ce système d'injection de carburant comprenant :
- une région à basse pression (10),
- un amortisseur de pression de carburant (12) disposé dans la région de basse pression (10) et
- au moins un capteur de pression (14) destiné à détecter la pression qui règne dans la région à basse pression (10),
**caractérisé en ce que**
un fonctionnement défectueux de l'amortisseur de pression de carburant (12) est détecté sur la base d'une fraction à haute fréquence d'un premier signal fourni par le capteur de pression (10), qui caractérise une variation dans le temps de la pression dans la région à basse pression (10).

2. Dispositif selon la revendication 1,
**caractérisé en ce que**
- le premier signal peut être filtré à passe-bas de sorte qu'un deuxième signal filtré à passe-bas est produit,
- un troisième signal constituant une différence absolue entre le premier signal et le deuxième signal est produit et
- le troisième signal est comparé à une valeur de seuil prédéterminée, et qu'on peut alors conclure à un fonctionnement défectueux de l'amortisseur de pression de carburant (12) en cas de dépassement de la valeur de seuil.

3. Dispositif selon la revendication 1 ou 2,
**caractérisé en ce que**
- le premier signal est soumis à une transformation de Fourier pour produire un spectre de fréquences correspondant à la variation dans le temps du premier signal et
- des fractions à haute fréquence du spectre de fréquences sont comparées à au moins une valeur de seuil prédéterminée et, en cas de dépassement de l'au moins une valeur de seuil, on conclut à un fonctionnement défectueux de l'amortisseur de pression de carburant (12).

4. Dispositif selon une des revendications précédentes,
**caractérisé en ce que**
le système d'injection de carburant présente une pompe à carburant à haute pression (16) et une région à haute pression (18) équipée d'un accumulateur de pression (20).

5. Dispositif selon une des revendications précédentes,
**caractérisé en ce que**
un fonctionnement défectueux de l'amortisseur de pression de carburant (12) qui est détecté est enregistré dans une mémoire de défauts.

6. Dispositif selon une des revendications précédentes,
**caractérisé en ce que**
la détection d'un fonctionnement défectueux de l'amortisseur de pression de carburant (12) s'effectue en prenant en compte des conditions de fonctionnement d'un moteur à combustion interne.

7. Dispositif selon une des revendications précédentes,
**caractérisé en ce que**
il est prévu au moins une unité de commande électronique (22) associée au système d'injection de carburant, dans laquelle s'effectue au moins une des évaluations précitées.

8. Dispositif selon une des revendications précédentes,
**caractérisé en ce que**
il comprend une interface destinée à être installée dans un véhicule automobile.

9. Dispositif selon une des revendications précédentes,
**caractérisé en ce que**
il comprend une interface destinée à être installée dans un dispositif de diagnostic séparé du véhicule automobile.

10. Procédé pour détecter des défauts dans un système d'injection de carburant, le système d'injection de carburant comprenant :
- une région à basse pression (10),
- un amortisseur de pression de carburant (12) disposé dans la région à basse pression (10) et
- au moins un capteur de pression (14) destiné à détecter la pression régnant dans la région à basse pression (10),
**Caractérisé en ce que**
le procédé présente les étapes suivantes :
- détection d'une variation dans le temps de la pression régnant dans la région à basse pression (10),
- production d'un premier signal qui caractérise la variation dans le temps de la région à basse pression (10) et
- évaluation d'une fraction à haute fréquence du premier signal pour détecter éventuellement d'après celle-ci un fonctionnement défectueux de l'amortisseur de pression de carburant (12).

11. Procédé selon la revendication 10,
**caractérisé en ce que**
- le premier signal est filtré à passe-bas de sorte qu'un deuxième signal filtré à passe-bas peut être produit,
- un troisième signal constituant une différence absolue entre le premier signal et le deuxième signal est produit et
- le troisième signal est comparé à une valeur de seuil prédéterminée et, en cas de dépassement de la valeur de seuil, on conclut à un fonctionnement défectueux de l'amortisseur de pression de carburant (12).

12. Procédé selon la revendication 10 ou 11,
**caractérisé en ce que**
- le premier signal est soumis à une transformation de Fourier pour produire un spectre de fréquences correspondant à la variation dans le temps du premier signal et
- des fractions à haute fréquence du spectre de fréquences sont comparées à au moins une valeur de seuil prédéterminée et, en cas de dépassement de l'au moins une valeur de seuil, on conclut à un fonctionnement défectueux de l'amortisseur de pression de carburant (12).

13. Procédé selon une des revendications 10 à 12,
**caractérisé en ce que**
le système d'injection de carburant présente une pompe à carburant à haute pression (16) et une région à haute pression (18) équipée d'un accumulateur de carburant (20).

14. Procédé selon une des revendications 10 à 13,
**caractérisé en ce que**
un fonctionnement défectueux de l'amortisseur de pression de carburant (12) qui a été détecté est enregistré dans une mémoire de défaut.

15. Procédé selon une des revendications 10 à 14,
**caractérisé en ce que**
la détection d'un fonctionnement défectueux de l'amortisseur de pression de carburant (12) s'effectue en prenant en compte des conditions de fonctionnement d'un moteur à combustion interne.

16. Procédé selon une des revendications 10 à 15,
**caractérisé en ce que**
il est prévu au moins une unité de commande électronique (22) associée au système d'injection de carburant, dans laquelle s'effectue au moins une des évaluations précitées.

17. Procédé selon une des revendications 10 à 16,
**caractérisé en ce que**
dans le cas d'un défaut de fonctionnement de l'amortisseur de pression de carburant (12) qui a été détecté, on prend des mesures de sécurité, en particulier une limitation de la vitesse de rotation et/ou un abaissement du niveau de pression du carburant.

18. Véhicule automobile équipé d'un dispositif pour la détection de défauts dans le système d'injection de carburant selon une des revendications 1 à 9 et en particulier pour la mise en oeuvre d'un procédé selon une des revendications 10 à 17.

19. Dispositif de diagnostic équipé d'un dispositif pour la détection de défauts dans le système d'injection de carburant d'un véhicule automobile, qui est disposé séparément du véhicule automobile, selon une des revendications 1 à 9, et en particulier pour la mise en oeuvre d'un procédé selon une des revendications 10 à 17.
